# EUROPÄISCHE PATENTSCHRIFT

(11) **EP 1 253 977 B1**
(45) Veröffentlichungstag und Bekanntmachung des Hinweises auf die Patenterteilung: **20.10.2004**
(21) Anmeldenummer: 01913793.4
(22) Anmeldetag: 08.02.2001
(51) Int. Cl.: B01L 3/00, B01J 19/00, G01N 27/447

(54) **VERFAHREN UND VORRICHTUNG ZUR ABFÜHRUNG SUSPENDIERTER MIKROPARTIKEL AUS EINEM FLUIDISCHEN MIKROSYSTEM**
METHOD AND DEVICE FOR WITHDRAWING SUSPENDED MICROPARTICLES FROM A FLUIDIC MICROSYSTEM
PROCEDE ET DISPOSITIF POUR EVACUER D'UN MICROSYSTEME FLUIDIQUE, DES MICROPARTICULES EN SUSPENSION

(30) Priorität: 09.02.2000 DE 10005735
(43) Veröffentlichungstag der Anmeldung: 06.11.2002
(73) Patentinhaber: Evotec Technologies GmbH, 40225 Düsseldorf (DE)
(72) Erfinder: FUHR, Günther, 13187 Berlin (DE); SHIRLEY, Stephen, Graham, Brandon, Warks CV8 3HW (GB); MÜLLER, Torsten, 12439 Berlin (DE); SCHNELLE, Thomas, 10243 Berlin (DE); HAGEDORN, Rolf, 13057 Berlin (DE)
(74) Vertreter: Hertz, Oliver, Dr.
(86) Internationale Anmeldenummer: PCT/EP2001/001356
(87) Internationale Veröffentlichungsnummer: WO 2001/058592

(56) Entgegenhaltungen:
- WO-A-99/66318
- US-A- 4 352 558
- BLANKENSTEIN G ET AL: "MODULAR CONCEPT OF A LABORATORY ON A CHIP FOR CHEMICAL AND BIOCHEMICAL ANALYSIS" BIOSENSORS & BIOELECTRONICS,GB,ELSEVIER SCIENCE PUBLISHERS, BARKING, Bd. 13, Nr. 3/04, 1998, Seiten 427-438, XP000700154 ISSN: 0956-5663

## Beschreibung

Die Erfindung betrifft ein Verfahren zur Abführung suspendierter Mikropartikel aus einem fluidischen Mikrosystem, insbesondere zur Auskopplung der Mikropartikel aus dem Mikrosystem, und Verfahren zur Dosierung und/oder Behandlung eines aus einem fluidischen Mikrosystem ausgekoppelten Mikropartikelstromes. Die Erfindung betrifft auch ein Mikrosystem, das zur gesteuerten Abführung von suspendierten Mikropartikeln ausgebildet ist, und eine Auskoppeleinrichtung zur Abführung von suspendierten Mikropartikeln aus einem Mikrosystem.

Fluidische Mikrosysteme zur Manipulierung biologischer oder synthetischer Mikropartikel sind allgemein bekannt. Die Mikrosysteme umfassen in der Regel einen oder mehrere Eingangskanäle, eine Kanalanordnung zur Aufnahme und/oder Führung von Fluiden mit suspendierten Mikropartikeln (z. B. biologische Zellen) und einen oder mehrere Ausgangskanäle. Die Kanalanordnung besitzt typische Dimensionen im Submillimeter-Bereich, z. B. ca. 100 bis 500 µm. In der Kanalanordnung erfolgt bspw. eine elektrische und/oder optische Manipulation und/oder Charakterisierung der suspendierten Mikropartikel. Die Suspensionsflüssigkeit mit den Mikropartikeln besitzt in der Kanalanordnung eine frei einstellbare Strömungsgeschwindigkeit, die insbesondere von den jeweils vorgesehenen Manipulations- und/oder Charakterisierungsschritten abhängig ist. Typische Strömungsgeschwindigkeiten liegen im Bereich von 10 mm/s oder darunter. An Ausgangskanäle als Enden des eigentlichen Mikrosystems schließen sich bei herkömmlichen Systemen Anschlussleitungen (sog. "tubing") an, in denen die Mikropartikel vom jeweiligen Ausgangskanal zur weiteren Bearbeitung oder Sammlung oder dergleichen abgeführt werden. Diese Anschlussleitungen besitzen typischerweise eine Länge von ca. 2 bis 8 cm. Dies entspricht bei einem Innendurchmesser von z. B. 254 µm rund 1 bis 4 µl Schlauchvolumen. In einer Anschlussleitung besitzt eine Zelle im Wesentlichen die gleiche Geschwindigkeit wie bei der Manipulierung in der Kanalanordnung und benötigt somit vom Ausgang des Mikrosystems bis zum Ende der Anschlussleitung je nach den Pumpraten Laufzeiten von rund 3 bis 60 min.

Derart hohe Laufzeiten sind für die reproduzierbare Weiterbearbeitung der suspendierten Mikropartikel ungünstig. Bspw. für eine gesicherte Einzelzellablage, wie es das Klonieren von Zellen erfordert, benötigt man erheblich kürzere Zeiten von ca. 10 bis 60 s. Außerdem verringern zusätzlich wirkende Sedimentationserscheinungen bei zu großen Laufzeiten deutlich die Wiederfindungsrate der Zellen.

Die schnelle und reproduzierbare Abführung von suspendierten Mikropartikeln aus Mikrosystemen, die Dosierung und/oder Behandlung der ausgeströmten Mikropartikel bei der Übertragung in Folgesysteme ist ein Problem, das bisher nicht mit vertretbarem technischen Aufwand gelöst werden konnte.

In der Fluidtechnik ist das sogenannte Hüllstromprinzip zur hydrodynamischen Fokussierung bekannt. Die hydrodynamische Fokussierung ermöglicht die Aufreihung von Probepartikeln und für bestimmte analytisch/präparative.Aufgaben die Vereinzelung von Partikeln und Zellen (siehe A. Radbruch in "Flow cytometry and cell sorting" Springer-Verlag, Berlin 1992). Zur Realisierung des Hüllstromprinzips wird ein Fluidstrom mit den Partikeln in einem koaxialen Düsenaufbau von einem äußeren Hüllstrom umgeben. Der Hüllstrom muss eine wesentlich größere Geschwindigkeit als der Fluidstrom besitzen, damit die hydrodynamische Fokussierung erfolgen kann. Die Hüllstromgeschwindigkeit ist typischerweise einige 1000-fach größer als die Fluidstromgeschwindigkeit. Der Fluidstrom wird vom Hüllstrom mitgerissen. Die Anwendung der hydrodynamischen Fokussierung ist auf makroskopische Laborgeräte beschränkt. Sie ist in der Mikrosystemtechnik nicht anwendbar, da durch die notwendig hohe Geschwindigkeit eines Hüllstroms die Strömungsverhältnisse im Mikrosystem auch stromaufwärts relativ zum genannten Düsenaufbau beeinflusst werden würden. Eine derartige externe und nicht reproduzierbare Störung der Strömungsverhältnisse in der Kanalanordnung eines Mikrosystems ist jedoch unerwünscht.

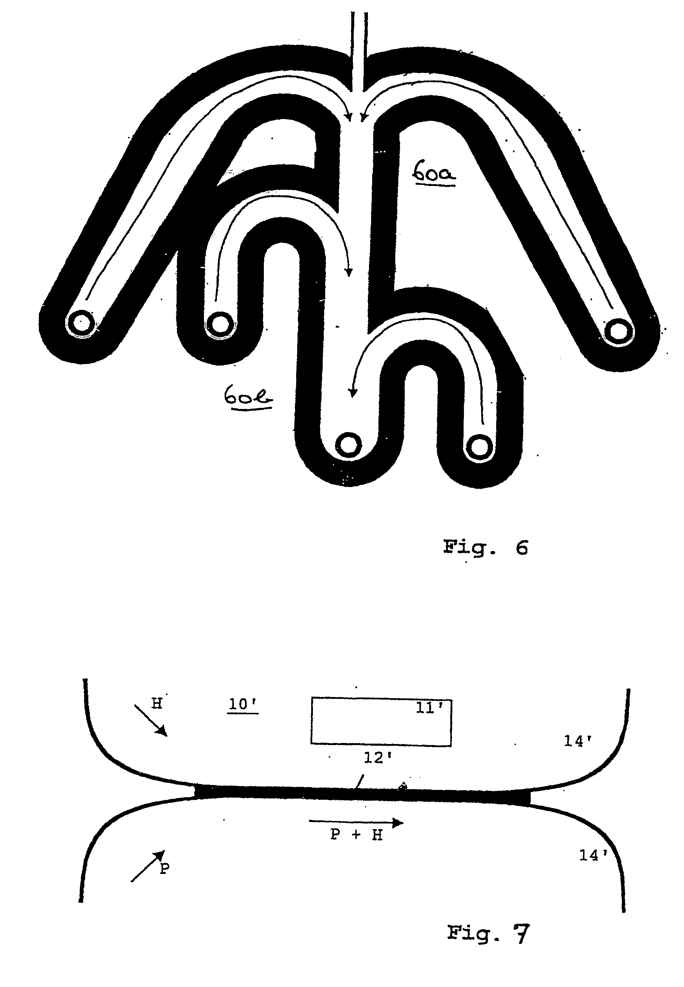

Es sind ferner mikrostrukturierte Strömungsschalter (sog. "Flow-switch") bekannt, die auf dem Hüllstromprinzip basieren (siehe G. Blankenstein in der Publikation "Microfabricated flow system for magnetic cell and particle separation" in "Sci. & Clin. Appl. Magn. Carriers", Hrsg. Häfeli et al., Plenum Press New York, 1997). Beim Strömungsschalter 10' wird, wie in Figur 7 illustriert, ein Probenstrom P in der Kanalanordnung eines Mikrosystems, z. B. in einem Separationsabschnitt 12', durch einen separaten Hüllstrom H begleitet. Am Separationsabschnitt 12' ist eine magnetische Trenneinrichtung 11' vorgesehen. An den Separationsabschnitt 12' schließen sich mehrere Ausgangskanäle 14' an, in die je nach der Funktion der Trenneinrichtung 11' bestimmte Anteile der Hüll- und Probenströme geleitet werden. Die Anwendung des Strömungsschalters ist auf Fluidzusammenflüsse oder -auftrennungen im Inneren des Mikrosystems beschränkt. Die Dimension der Ausgangskanäle legt die Parameter der zusetzbaren Proben- und Hüllströme fest. Das oben genannte Problem der Abführung suspendierter Mikropartikel aus Mikrosystemen kann mit einem Strömungsschalter nicht gelöst werden.

Die Zentrierung oder Umlenkung eines Probenstrom wird mit der hydrodynamischen Fokussierung und den genannten Strömungsschaltern realisiert. Die oben genannten Probleme bei der Auskopplung oder Fokussierung von Mikropartikelsuspensionen am Ausgang von Mikrosystemen, d. h. insbesondere an der Schnittstelle zu makroskopischen Systemen, wird damit jedoch nicht gelöst.

WO-A-99 66 318 beschreibt ein fluidisches Mikrosystem mit Probenkanälen und Fokussierkanälen im Inneren des Mikrosystems.

Die Aufgabe der vorliegenden Erfindung ist es, ein verbessertes Verfahren bzw. ein geeignetes System zur Abführung suspendierter Mikropartikel aus einem fluidischen Mikrosystem bereitzustellen, das insbesondere einen einfachen Aufbau besitzt und eine schnelle Partikelabführung ohne nachteilige Beeinflussung der Funktion des Mikrosystems, insbesondere der dort herrschenden Strömungsbedingungen, gewährleistet, robust ist und einfach an unterschiedliche Anwendungen angepasst werden kann. Mit der Erfindung wird insbesondere eine verlustarme oder verlustfreie Entnahme von Mikropartikeln mit einem Flüssigkeitsstrom aus Mikrosystemen oder Mikrokapillarsystemen angestrebt.

Die Aufgabe der Erfindung ist es insbesondere auch, bei der Abführung suspendierter Mikropartikel die Eigenschaften der entnommenen oder abgeführten Suspension zu beeinflussen. Die Suspension soll bspw. in ihrer stofflichen Zusammensetzung und/oder in Bezug auf die Partikeldichte (Verdünnung) verändert werden. Die Aufgabe der Erfindung ist es somit auch, ein Verfahren zur Einstellung der Partikeldichte in einer aus einem Mikrosystem ausgekoppelten Suspension zur Dosierung der ausgekoppelten Suspension bereitzustellen. Weitere Aufgaben der Erfindung sind die Bereitstellung von Mikropartikeln und die Behandlung eines ausgekoppelten Mikropartikelstromes.

Diese Aufgaben werden durch ein Verfahren und Vorrichtungen mit dem Merkmalen gemäß Anspruch 1 bzw. 12 oder 25 gelöst. Vorteilhafte Ausführungsformen und Anwendungen der Erfindung ergeben sich aus den abhängigen Ansprüchen.

Die Grundidee der Erfindung besteht in der Schaffung eines Verfahrens zur Abführung eines Fluidstroms mit suspendierten Mikropartikeln aus einem fluidischen Mikrosystem, bei dem der Fluidstrom am Ende eines Ausgangskanals des Mikrosystems mit mindestens einem Auskoppelstrom zu einem Ausgangsstrom zusammengeführt und dieser als ein Gesamtstrom abgeleitet wird. Im Unterschied zu den herkömmlichen Techniken der hydrodynamischen Fokussierung und des Strömungsschalters erfolgt die Bildung des Ausgangsstroms nach der Manipulierung und/oder Charakterisierung der suspendierten Mikropartikel in einem Mikrosystem, ohne in diesem die Strömungsverhältnisse zu beeinflussen. Die Ableitung des Ausgangsstroms erfolgt durch ein passendes Ableitungselement (z. B. Schlauch, Rohr oder dergleichen) mit charakteristischen Dimensionen, die an die Parameter eines Bauteils zur Aufnahme des Ausgangsstroms (z. B. eine Mess-, Speicher- oder Manipulatoreinrichtung) angepasst sind.

Das Verfahren zur Abführung des Fluidstroms ist ein Dosierungsverfahren, bei dem die Dichte der Mikropartikel und ihre Bereitstellung am Ende des Ableitungselementes in vorbestimmter Weise eingestellt wird. Die Erfindung ermöglicht erstmalig, die beim Betrieb eines fluidischen Mikrosystems erforderlichen Strömungsgeschwindigkeiten frei und unabhängig voneinander einzustellen. Im Mikrosystem ist eine relativ geringe Strömungsgeschwindigkeit der Mikropartikelsuspension gegeben (siehe oben). Nach der Auskopplung aus dem Mikrosystem soll die Strömungsgeschwindigkeit je nach Anwendungsfall in bestimmter Weise vergrößert werden. Im Unterschied zum Hüllstromprinzip der hydrodynamischen Fokussierung besitzen die Strömungsgeschwindigkeiten des Fluid- und Auskoppelstromes vergleichbare Werte. Die Strömungsgeschwindigkeit des Auskoppelstromes kann zwar geringer, gleich oder größer als die Strömungsgeschwindigkeit des Fluidstromes sein. Allerdings werden keine derart großen Geschwindigkeitsunterschiede wie beim Fokussieren eingestellt (z. B. Faktor einige 1000 oder mehr). Bei typischen Anwendungen liegt der Quotient der Strömungsgeschwindigkeiten der Fluid- und Auskoppelströme im Bereich von 0.1 bis 500, vorzugsweise unterhalb von 300. Vorteilhafterweise ist die Trägheit der erfindungsgemäßen Suspensionsdosierung bei derartigen Strömungsverhältnissen besonders gering. Das partikelfreie Volumen des Auskoppelstromes ist insbesondere nach dem Vorbeitritt jedes einzelnen Mikropartikels mit-dem Fluidstrom individuell einstellbar. Die Partikelfolge im Fluidstrom umfasst typischerweise ein Mikropartikel in einem Zeitbereich von ca. 100 ms bis 1 s. Derartige Zeitbereiche lassen sich die Strömungsgeschwindigkeit des mindestens einen Auskoppelstromes einstellen. Je nach Aufgabenstellung können einzelne Partikel schneller oder langsamer aus dem Mikrosystem geführt werden. Damit wird ein bisher offenes Problem der Mikrosystemtechnik erstmalig gelöst.

Zur Erzeugung des Auskoppelstroms wird gemäß einer bevorzugten Ausführungsform der Erfindung ein Strömungsauskoppler mit mindestens einem Auskoppelkanal verwendet, der am Ende des Ausgangskanals des Mikrosystems mündet. Es werden vorzugsweise mehrere Auskoppelkanäle verwendet, die von verschiedenen Richtungen an den Fluidstrom herangeführt werden. Die wichtigste Aufgabe des mindestens einen Auskoppelstroms besteht in der fluidischen Addition einer vorbestimmten Flüssigkeitsmenge zum Fluidstrom am Ende des Mikrosystems. Durch Einstellung der Durchflussrate des Auskoppelstroms (Volumendurchsatz pro Zeiteinheit) ist das Probenvolumen am Auslass des Mikrosystems beliebig einstellbar. Es wird vorzugsweise mindestens ein Auskoppelstrom gebildet, dessen Strömungsgeschwindigkeit geringer als die Strömungsgeschwindigkeit des Fluidstroms ist und dessen Pumprate größer als die Pumprate des Fluidstroms ist. Erfindungsgemäß ist am Ausgang des Mikrosystems laufend eine Verdünnung des Fluidstroms vorgesehen.

Gemäß einer weiteren Funktion dient der mindestens eine Auskoppelstrom auch einer Behandlung der suspendierten Mikropartikel. Hierzu wird der Auskoppelstrom durch mindestens eine Behandlungslösung, z. B. eine Waschlösung, ein Kultivierungsmedium oder eine Konservierungslösung, gebildet. Es sind vorzugsweise mehrere Auskoppelkanäle zur Führung verschiedener Behandlungslösungen vorgesehen, die von verschiedenen Richtungen gleichzeitig oder stromabwärts aufeinanderfolgend mit dem Fluidstrom zusammengeführt werden.

Bei einer alternativen Ausführungsform der Erfindung wird die Pumprate des Auskoppelstroms so eingestellt, dass dessen Strömungsgeschwindigkeit einen definierten Wert besitzt und größer als die Strömungsgeschwindigkeit des Fluidstroms ist. Bei dieser Gestaltung kann der Strömungsauskoppler selbst als Pumpeneinrichtung zur Einstellung der Strömungsverhältnisse im Mikrosystem verwendet werden, der die Pumpeneinrichtungen in der Kanalanordnung des Mikrosystems entlastet oder ersetzt.

Gegenstand der Erfindung ist auch ein fluidisches Mikrosystem mit einer Kanalanordnung zur Aufnahme und/oder zum Durchfluss von Fluiden mit suspendierten Mikropartikeln und mindestens einem Ausgangskanal zur Führung eines Fluidstroms, bei dem am Ende des Ausgangskanals mindestens ein Strömungsauskoppler mit mindestens einem Auskoppelkanal zur Führung eines Auskoppelstroms vorgesehen ist, der am Ende des Ausgangskanals mündet.

Die Mündung des mindestens einen Auskoppelkanals am Ende des Mikrosystemausgangs ist vorzugsweise so gebildet, dass die Fluid- und Auskoppelströme konvergierend zusammenfließen. Am stromabwärts gelegenen Ende des Strömungsauskopplers ist ein Ableitungselement z. B. in Form eines Schlauches oder Rohres vorgesehen, an dessen Ende sich gegebenenfalls mindestens ein weiterer Strömungsauskoppler mit weiteren Auskoppelkanälen zur weiteren Verdünnung des Ausgangsstroms anschließt.

Gemäß einer bevorzugten Ausführungsform des Mikrosystems bildet der mindestens eine Auskoppelkanal einen seitlichen Einfluss, der in den Ausgangskanal oder am Ende des Ausgangskanals mündet. Da keine Fokussierung der Partikel vorgesehen ist, kann mit Vorteil auf den bei der hydrodynamischen Fokussierung gebildeten ringförmigen Einfluss verzichtet und zu einer planaren Ausführung der Kanalstruktur übergegangen werden. Es ergeben sich insbesondere Vorteile in Bezug auf den einfachen Aufbau und die Miniaturisierbarkeit des Strömungsauskopplers. Wenn mehrere Auskoppelkanäle vorgesehen sind, sind diese vorzugsweise ebenfalls planar in einer Ebene als seitliche Einflüsse angeordnet. Mehrere Strömungsauskoppler können auch je nach ihren Aufgaben asymmetrisch und/oder in Strömungsrichtung mit Abstand voneinander versetzt angeordnet sein.

Gemäß einer weiteren Ausführungsform der Erfindung ist das Mikrosystem mit einer am Strömungsauskoppler des Mikrosystems angeordneten Mess- oder Speichereinrichtung ausgestattet. Als Speichereinrichtung ist beispielsweise eine Titerplatte oder einer Zellkulturplatte vorgesehen.

Gegenstand der Erfindung ist auch ein Strömungsauskoppler zur Abführung suspendierter Mikropartikel an sich, der an einen Ausgang eines fluidischen Mikrosystems zur Strömungsverdünnung des austretenden Fluidstroms ansetzbar ist. Unter Strömungsverdünnung wird die während des Strömens laufende Verringerung der Partikeldichte im Fluidstrom durch Zusammenführen mit einem oder mehreren Auskoppelströmen verstanden.

Ein wichtiges Merkmal der Erfindung besteht darin, dass die Dosierung des ausgekoppelten Fluidstromes nach der Manipulation und/oder Charakterisierung der Mikropartikel im Mikrosystem erfolgt. Manipulationen und/oder Charakterisierungen, wie z. B. dielektrophoretische Behandlungen unter Verwendung dielektrischer Feldkäfige oder Feldbarrieren, Verschiebungen oder Vermessungen mit optischen Kräften (optischen Pinzetten), elektrophoretischer oder elektroosmotischer Prozesse, erfolgt im Gegensatz zu allen herkömmlichen Hüllstromtechniken vor dem Zusammenfließen des Fluidstromes mit dem mindestens einen Auskoppelstrom. Es ist bspw. vorgesehen, dass zunächst in der Kanalanordnung des Mikrosystems die Mikropartikel mit an sich bekannten Feldbarrieren räumlich getrennt und aufbereitet werden. Es erfolgt eine Vermessung der Mikropartikel an den jeweiligen Positionen. Die Freigabe der Feldbarrieren ergibt eine Abführung der Mikropartikel durch den Ausgangskanal mit der Strömungsgeschwindigkeit in der Kanalordnung, d. h. einer relativ niedrigen Transportgeschwindigkeit. Während die geringe Transportgeschwindigkeit im Mikrosystem erwünscht ist, um z. B. die dielektrischen Feldkäfige zu befüllen, wird in dem Strömungssauskoppler eine anwendungsabhängig erhöhte Transportgeschwindigkeit (Strömungsgeschwindigkeit) eingestellt. Durch den zugeführten Auskoppelstrom wird vorteilhafterweise sicher gestellt, dass die im separierten Zustand untersuchten Mikropartikel nach der Manipulation oder Messung separiert bleiben, wobei keine Verluste auftreten, und kurze Transportzeiten erreicht werden. Dies besitzt besondere Vorteile bei der Manipulation biologischer Zellen und insbesondere bei der Einzelzellablage.

Die Erfindung besitzt die folgenden Vorteile. Durch den Einsatz eines Auskoppelstroms am Ausgang eines Mikrosystems können die suspendierten Mikropartikel, z. B. biologische Zellen oder Zellbestandteile, synthetische Partikel oder Kompositpartikel mit biologischen und synthetischen Anteilen, Makromoleküle oder Makromolekülaggregate verlustfrei oder zumindest verlustarm aus dem Mikrosystem entnommen oder abgeführt werden. Die Flußrate im Ausgangsstrom kann ohne störende Beeinflussung der Strömungsgeschwindigkeit im Mikrosystem stromaufwärts von dessen Ausgang erhöht werden. Durch die Erhöhung der Strömungsgeschwindigkeit der Partikelsuspension nach Abführung aus dem Mikrosystem wird die Gefahr von Wechselwirkungen zwischen den Partikeln und Kanalwänden verringert. Es können bspw. Zelladhäsionen vermieden werden. Die Erfindung ist mit Vorteil insbesondere bei niedrigen Strömungsgeschwindigkeiten im Mikrosystem im Bereich von z. B. 1 µm/s bis 10 mm/s anwendbar. Erfindungsgemäß kann die Geschwindigkeit der Partikelsuspension zur effektiven und schnellen Entnahme der Partikel aus dem Mikrosystem beim Austritt aus diesem möglichst stark erhöht werden. Geeignet hierfür ist z. B. eine Peristaltikpumpe. In einem Anwendungsbeispiel konnte die Geschwindigkeit der Suspension von 1 - 20 µl/h so auf 70 - 280 µl/h beschleunigt werden. Bei höheren Strömungsgeschwindigkeiten wirkt sich allerdings die Pulsation der Peristaltikpumpe auf die Strömung der Partikel vor dem Strömungsauskoppler aus (z. B. Störung der Halterung der Mikropartikel in dielektrischen Feldkäfigen).

Besser geeignet zur schnellen Entnahme der Partikel ist der Einsatz eines hydrodynamischen Pumpprinzips. Es wurde beispielsweise aus einem flüssigkeitsgefüllten, über einen Kompressor und angeschlossenem Drosselventil mit geringem Überdruck beaufschlagten Reservoir die Flüssigkeit in den Strömungsauskoppler zugeführt. So waren wesentlich höhere Flussraten, nämlich bis zu 25 µl/s (bei einem Arbeitsbereich von bis zu 0.8 bar Überdruck), typischerweise 2 µl/s (bei einem Arbeitsbereich von bis zu 0.1 bar Überdruck) ohne negative Beeinflussung der Eingangs-Partikelsuspension im Mikrosystem zu erreichen.

Es ergibt sich aber auch eine Verringerung der Suspensionsdichte. Diese Verringerung der Suspensionsdichte ist von der Partikelaufreihung bei der hydrodynamischen Fokussierung zu unterscheiden. Nach der Manipulierung und/oder Charakterisierung einzelner Mikropartikel im Mikrosystem sind diese am Ausgang bereits aufgereiht oder anderweitig voneinander getrennt. Die Verringerung der Suspensionsdichte bedeutet hingegen, dass Fluidmengen jeweils mit einem oder wenigen Partikeln, z. B. in Form von Tropfen, bereitgestellt werden können, deren Volumen beispielsweise an das Aufnahmevolumen einer sich anschließenden Messeinrichtung angepasst ist. Es kann eine vorbestimmte Tropfengröße am Ende des dem Strömungsauskoppler nachgeordneten Ableitungselements gebildet sein, was für die Einzelzellablage vorteilhaft ist.

Eine Verringerung der Suspensionsdichte ermöglicht auch großzügigere Toleranzen bei der Fluidankopplung. Wenn bei der Partikelmanipulierung im Mikrosystem bspw. im Ergebnis von Sortiervorgängen im Ausgangsstrom Totvolumina entstehen, so werden diese durch die Suspensionsverdünnung ausgeglichen.

Ein weiterer wichtiger Vorteil besteht beim Zusatz von Behandlungslösungen zum Fluidstrom. Die Behandlungslösung kann mit einem gegenüber dem Suspensionsvolumen im Mikrosystem erheblich vergrößerten Volumen verwendet werden. Vorteilhafterweise können verschiedene Auskoppelströme aus verschiedenen Behandlungslösungen bestehen und ggf. mit verschiedenen Flussraten zugeführt werden. Die Behandlung der abgeführten Mikropartikel ist quantitativ einstellbar.

Der erfindungsgemäße Strömungsauskoppler kann einfach an beliebige Mikrosysteme angepasst werden, da in Bezug auf die Geometrie der Zusammenführung der Fluid- und Auskoppelströme keine Einschränkungen bestehen. Es ist insbesondere nicht zwingend erforderlich, dass der Fluidstrom vom Auskoppelstrom vollständig umhüllt wird. Es ist auch keine Fokussierung der Mikropartikel im Ausgangsstrom erforderlich.

Zur Erzielung der erfindungsgemäßen Strömungsverdünnung kann die Strömungsgeschwindigkeit des Auskoppelstroms bei geeignetem Querschnitt des Auskoppelkanals so gering eingestellt werden, dass im Wesentlichen keine Rückwirkung auf das Mikrosystem erfolgt.

Die Erfindung ist auch bei Mikrosystemen anwendbar, in denen kein oder nur ein vernachlässigbar kleiner Nettostrom im Mikrosystem auftritt und die Mikropartikel mit elektrischen oder magnetischen Kräften durch die Kanalanordnung bewegt werden.

Weitere Einzelheiten und Vorteile der Erfindung werden im Folgenden unter Bezug auf die Zeichnungen beschrieben. Es zeigen:
- Figur 1: eine Ausführungsform eines mit einem Strömungsauskoppler ausgestatteten erfindungsgemäßen Mikrosystems,
- Figur 2: eine Draufsicht auf einen erfindungsgemäßen Strömungsauskoppler,
- Figuren 3 bis 6: Draufsichten auf weitere Ausführungsformen erfindungsgemäßer Strömungsauskoppler, und
- Figur 7: eine Illustration eines herkömmlichen Strömungsschalters in fluidischen Mikrosystemen.

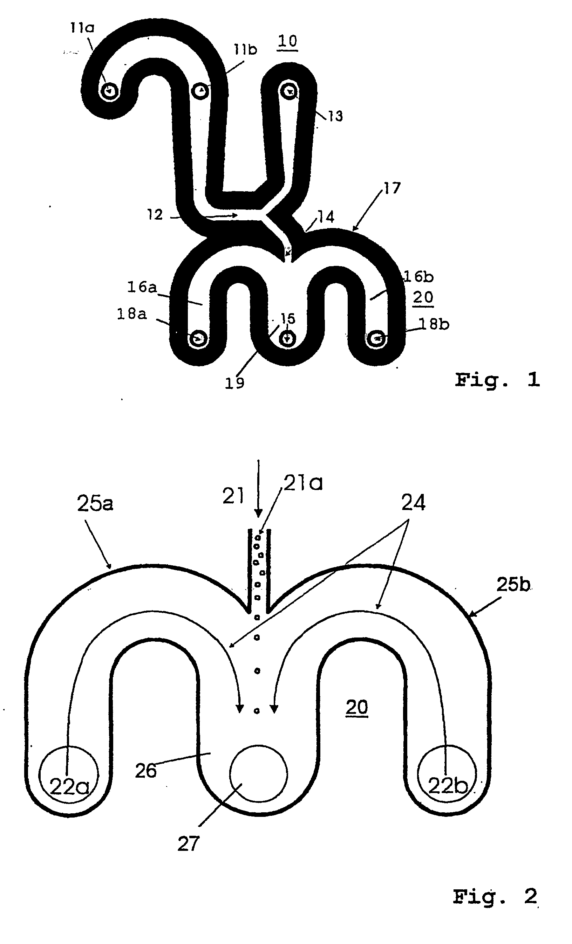

Figur 1 illustriert in schematischer Draufsicht Komponenten eines fluidischen Mikrosystems 10 mit einem Strömungsauskoppler 20, die zur Realisierung der erfindungsgemäßen Abführung suspendierter Mikropartikel aus dem Mikrosystem ausgelegt sind. Unter einem fluidischen Mikrosystem wird hier allgemein eine Einrichtung mit mindestens einem Eingang, einer Kanalanordnung zur Aufnahme und/oder Führung eines Fluids, insbesondere einer Partikelsuspension, und mindestens einem Ausgang verstanden. Zwischen den Ein- und Ausgängen erstrecken sich über die Kanalanordnung Flüssigkeitsleitungen mit anwendungsabhängigen Geometrien, Dimensionen bzw. Querschnittsformen. Die Flüssigkeitsleitungen sind bspw. als strukturierte Kanäle in einem Festkörperträger (Chip), z. B. aus einem Halbleitermaterial oder aus Kunststoff, ausgebildet. Die Kanalböden werden durch das Chipmaterial und die Kanaldecken durch eine geeignete Chipabdeckung, z. B. aus Glas oder Kunststoff, bereitgestellt. Es ist jedoch auch möglich, dass die seitlichen Kanalwände durch Abstandsstücke (Spacer) gebildet werden, die entsprechend geformt von einem Festkörperträger aufragen. Im fluidischen Mikrosystem können ferner Mikroelektroden zur Bildung hochfrequenter elektrischer Felder für die dielektrophoretische Manipulation der Partikel, Manipulationseinrichtungen, wie z. B. Elektroporationselektroden, Pumpeinrichtungen und Messeinrichtungen vorgesehen sein. Diese Komponenten sind an sich aus der Mikrosystemtechnik bekannt und werden daher hier nicht im Einzelnen erläutert.

Typische Dimensionen der Kanalanordnung des Mikrosystems liegen unterhalb 800 µm, vorzugsweise 500 µm, (Kanalbreite) und unterhalb 200 µm (Kanalhöhe).

Bei der in Figur 1 gezeigten Ausführungsform der Erfindung sind das fluidische Mikrosystem 10 und der Strömungsauskoppler 20 gemeinsam auf einem Substrat durch einen die Kanalwände bildenden Spacer 17 vorgesehen. Es ist alternativ auch möglich, das Mikrosystem 10 und den Strömungsauskoppler 20 modular getrennt voneinander auszuführen (siehe unten).

Das Mikrosystem 10 besitzt zwei Eingänge 11a und 11b, die mit einem Hauptkanal 12 verbunden sind, der allgemein eine systemfunktionsspezifische Kanalanordnung repräsentiert. Der Hauptkanal 12 teilt sich am Ende in einen Ablauf 13 (sog. Wastekanal) zur Abführung unerwünschter oder abgetrennter Fluidund/oder Mikropartikelanteile und einen Ausgangskanal 14. Im Ausgangskanal 14 wird die Suspension mit den gewünschten Mikropartikeln geführt, die vom Mikrosystem zu einem sich anschließenden Bauteil zur Aufnahme des Ausgangsstromes, z. B. einer Mess-, Speicher- oder Manipulatoreinheit, überführt werden sollen. Hierzu ist am Ende des Ausgangskanals 14 der Strömungsauskoppler 20 vorgesehen.

Der Strömungsauskoppler 20 besitzt zwei Auskoppelkanäle 16a, 16b, die sich jeweils von einem Auskoppelstromeingang 18a, 18b zum Ende des Ausgangskanals 14 erstrecken. Die Auskoppelkanäle 16a, 16b münden derart am Ende des Ausgangskanals 14, dass die strömungsrichtungen in den Ausgangs- bzw. Auskoppelkanälen jeweils einen Winkel bilden, der kleiner als 90° ist. Nach der Mündung gehen die Auskoppelkanäle 16a, 16b in ein Ableitungselement 19 über, das an einem Ausgang 15 endet. Die Anordnung der Auskoppelkanäle 16a, 16b, die auch als "Doppelhorn"-Anordnung bezeichnet wird, ist durch eine in Bezug auf die verlängerte Strömungsrichtung am Ende des Ausgangskanals 14 spiegelsymmetrische Anordnung der gekrümmten Auskoppelkanäle 16a, 16b gekennzeichnet.

Die Kanalstruktur 10, 20 ist des Weiteren mit (nicht dargestellten) Pumpeneinrichtungen ausgestattet, die für einen Fluidtransport im Mikrosystem 10, eine Abfuhr unerwünschten Fluids durch den Ablauf 13, den Transport von Auskoppelströmen durch die Auskoppelkanäle 16a, 16b und die Abfuhr des aus Ausgangs- und Auskoppelströmen gebildeten Ausgangsstrom durch das Ableitungselement 19 zum Ausgang 15 sorgen. Diese Pumpeneinrichtungen sind an sich bekannt und umfassen bspw. Peristaltikpumpen, Spritzenpumpen oder auch elektroosmotisch wirkende Fluid- oder Partikelantriebe. Weitere Beispiele umfassen Pumpeneinrichtungen, die auf hydrostatischem Druck basieren.

Die Kanäle in erfindungsgemäßen Mikrosystemen besitzen typischerweise Kanalhöhen von ca. 20 bis 50 µm und Kanalbreiten von rd. 200 bis 800 µm. Die eingestellten Strömungsgeschwindigkeiten in den Kanälen liegen vorzugsweise im Bereich von 50 bis 1000 µm/s entsprechend einer Pumpenrate im Bereich von 1 bis 20 µl/h. Die Auskoppelkanäle 16a, 16b besitzen größere Querschnittsdimensionen als der Ausgangskanal 14. Die Kanalbreite liegt typischerweise im Bereich von 5 µm bis 500 µm.

Das Mikrosystem 10 gemäß Figur 1 wird wie folgt betrieben. Das Mikrosystem 10 dient bspw. der Trennung von suspendierten Mikropartikeln in Abhängigkeit von ihrer Fähigkeit, auf eine bestimmte Stoffeinwirkung (z. B. einen Antikörper) zu reagieren. Durch die Eingänge 11a, 11b werden ein Fluid mit den zu trennenden Mikropartikeln bzw. eine Lösung mit einer Wirksubstanz eingeströmt. Im Hauptkanal 12 kommt es zur Wechselwirkung zwischen den Mikropartikeln und der Wirksubstanz und zum eigentlichen Trennvorgang. Der Trennvorgang umfasst bspw. die folgenden Schritte. Zuerst werden die Mikropartikel mit an sich bekannten Feldbarrieren räumlich getrennt und aufgereiht. Anschließend erfolgt eine Vermessung einzelner Mikropartikel, wie z. B. eine Messung der dielektrischen Rotation. Je nach dem Messergebnis wird eine Feldbarriere am Ende des Hauptkanals 12 betätigt, um die Mikropartikel in den Ablauf 13 oder in den Ausgangskanal 14 zu lenken. Beim Abführen der Mikropartikel aus dem Ausgangskanal 14 besteht nun bei den herkömmlichen Systemen das Problem einer unverändert geringen Transportgeschwindigkeit, das hier durch den Betrieb des Strömungsauskopplers 20 gelöst wird.

Im Strömungsauskoppler 20 strömen in den Auskoppelkanälen 16a, 16b von den Eingängen 18a, 18b zum Ende des Ausgangskanals 14 Auskoppelströmungen mit einer gegenüber dem Fluidstrom im Ausgangskanal 14 erhöhten.Pumprate. Der Fluidstrom wird mit den Auskoppelströmen zu einem Ausgangsstrom zusammengeführt. Der Ausgangsstrom befördert die Mikropartikel vom Ausgangskanal 14 zum Ausgang 15 des Ableitungselements 19. Dabei wird durch die zugeführten Auskoppelströme ein Anhaften von Mikropartikeln am Rand des Ableitungselements 19 und deren Sedimentation verhindert. Am Ende des Ausgangskanals 14 eintreffende Mikropartikel werden sicher und mit einer vorbestimmten Geschwindigkeit zum Ausgang 15 befördert. Dies erleichtert insbesondere die Ablage von Mikropartikeln in den Reservoiren einer Zellkulturplatte.

Am Ausgang 15 des Strömungsauskopplers 20 kann sich ein weiteres "Tubing" oder Schlauchelement anschließen, in dem der gesamte Ausgangsstrom aus Fluid- und Auskoppelströmen weitergeleitet wird, ohne dass die genannten Anhaftungs- oder Sedimentationsprobleme auftreten.

Der gesamte Ausgangsstrom aus Fluid- und Auskoppelströmen wird mit einer definierten Suspensionsdichte bereitgestellt. Fluidmengen mit jeweils einem oder mehreren Partikeln, z. B. in Form von Tropfen, treten am Ausgang des Auskopplers oder des Schlauchelementes aus. Die Volumina dieser Fluidmengen lassen sich mit dem Strömungsauskoppler an die Anforderungen einer sich anschließenden Mess- oder Speichereinrichtung anpassen. Bspw. werden die Fluidmengen (Tropfen) auf einer Titerplatte eines Hochdurchsatz-Screening-Systems abgelegt. Es erfolgt vorzugsweise eine Einzelzellablage. Alternativ kann die Ablage bspw. auch auf eine Zellkulturplatte als Speichereinrichtung erfolgen.

Figur 2 zeigt eine weitere Ausführungsform des Strömungsauskopplers 20 in der "Doppelhorn"-Anordnung. Im Ausgangskanal 21 des (nicht dargestellten) Mikrosystems werden in Pfeilrichtung Mikropartikel 21a transportiert. Von den Auskoppelstromeingängen 22a, 22b fließen entsprechend der gezeigten Pfeilrichtung Auskoppelströme 24 durch die am Ende des Ausgangskanals 21 mündenden Auskoppelkanäle 25a, 25b. Die Auskoppelströme 24 werden mit einer Peristaltikpumpe, einer Spritzenpumpe oder einer Pumpeneinrichtung basierend auf hydrostatischem Druck erzeugt. Sie nehmen die Partikel 21a am Ende des Ausgangskanals mit, so dass diese durch das Ableitungselement 26 zum Ausgang 27 geführt werden. Der Ausgang 27 des Strömungsauskopplers 20 ist vorzugsweise am Schnittpunkt der konvergierenden Auskoppelströme 24 angeordnet. Bei der symmetrischen Kanalausrichtung entspricht dies einer Position auf einer Bezugslinie, die der Ausrichtung des Ausgangskanals 21 entspricht.

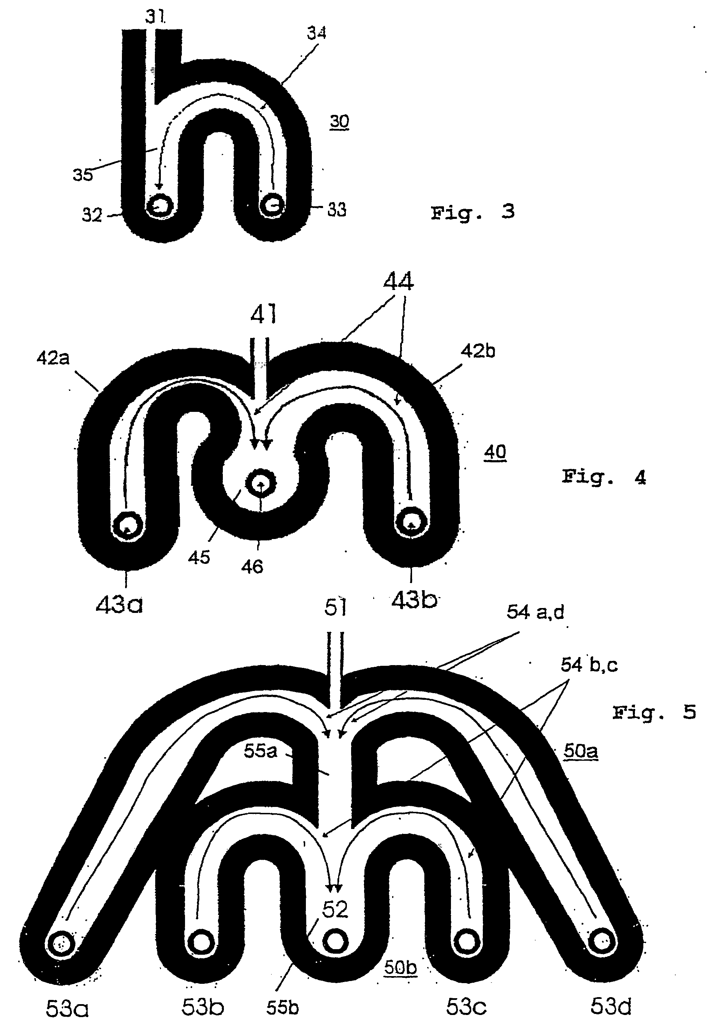

Eine abgewandelte Ausführungsform des erfindungsgemäßen Strömungsauskopplers ist in Figur 3 illustriert. Der Strömungsauskoppler 30 am Ende des Ausgangskanals 31 besitzt nur einen Auskoppelkanal 34, der von einem Eingang 33 zum Ausgang 32 des Ableitungselements 35 führt. Wie bei den oben erläuterten Ausführungsformen wird auch bei diesem asymmetrischen Aufbau der Fluidstrom vom Ausgangskanal 31 mit dem Auskoppelstrom im Auskoppelkanal 34 zusammengeführt. Die im Fluidstrom enthaltenen Mikropartikel werden im gemeinsamen Ausgangsstrom mitgerissen und zum Ausgang 32 geleitet. Es wurde überraschenderweise festgestellt, dass auch bei dieser asymmetrischen Gestaltung ein Anhaften von Mikropartikeln an der Wand des Ableitungselements 35 ausgeschlossen wird.

Figur 4 illustriert ein weiteres Beispiel einer "Doppelhorn"-Anordnung, die jedoch im Unterschied zur Ausführungsform gemäß Figur 2 asymmetrisch gebildet ist. Der Strömungsauskoppler 40 am Ende des Ausgangskanals 41 besitzt einen ersten Auskoppelkanal 42a mit einem engen Kanalquerschnitt und einen zweiten Auskoppelkanal 42b mit einem weiten Kanalquerschnitt, die entsprechend von den Eingängen 43a, 43b über das Ableitungselement 45 zum Ausgang 46 führen. Das Bezugszeichen 44 weist auf die Auskoppelströme, die in Bezug auf die Pumpraten und die Geometrie der Zusammenführung mit dem Fluidstrom vom Ausgangskanal 41 asymmetrisch gebildet sind.

Durch den asymmetrischen Aufbau gemäß Figur 4 kann der Zustrom bestimmter Behandlungssubstanzen mit den Auskoppelströmen 44, wie er an sich auch bei den oben erläuterten Ausführungsformen möglich ist, weiter in Bezug auf die Substanzmengen oder Einströmrichtungen der Auskoppelströmung modifiziert werden. Es ist z. B. vorgesehen, die Menge der einem Auskoppelstrom zugesetzten Behandlungssubstanz in Abhängigkeit vom Mess- oder Betriebszustand des Mikrosystems 10 (siehe Figur 1) zu variieren.

Figur 5 illustriert in schematischer Draufsicht eine weitere Ausführungsform der Erfindung, bei der zwei in Serie geschaltete Strömungsauskoppler 50a, 50b vorgesehen sind. Die Strömungsauskoppler 50a, 50b sind in Strömungsrichtung nacheinander angeordnet. Der erste Strömungsauskoppler 50a ist am Ende des Ausgangskanals 51 angeordnet und mit den Eingängen 53a, 53d und den gekrümmten Auskoppelkanälen zur Führung der Auskoppelströme 54a, 54d vorgesehen. Am Ausgang des Ableitungselements 55a ist der zweite Strömungsauskoppler 50b angebracht. Der zweite Strömungsauskoppler 50b umfasst ebenfalls gekrümmte Auskoppelkanäle von den Eingängen 53b, 53c zur Führung der Auskoppelströme 54b, 54c. Der aus dem Fluid- und Auskoppelströmen gebildete Ausgangsstrom wird über den Ausgang 52 abgeleitet.

Bei der Ausführungsform gemäß Figur 5 können über die einzelnen Auskoppelkanäle verschiedene Behandlungslösungen, Kultivierungsmedien oder Konservierungslösungen zugeführt werden. Der Aufbau gemäß Fig. 5 kann auch asymmetrisch oder durch modifiziertes Einmünden der Auskoppelkanäle gebildet sein. Die Auskoppelkanäle können bspw. entsprechend bestimmten Positionen an den Ableitungselementen 55a, 55b vorgesehen sein, um die Behandlungslösungen gemäß einem definierten Protokoll zuzuführen.

Ein Beispiel für eine Modifizierung des Einmündens der Auskoppelkanäle ist in Figur 6 gezeigt. Analog zu Figur 5 sind zwei in Serie geschaltete Strömungsauskoppler 60a, 60b vorgesehen, bei dem der erste zwei in Bezug auf die Strömungsrichtung an gleicher Position angeordnete Auskoppelkanäle aufweist. Beim zweiten Strömungsauskoppler 60b sind die Auskoppelkanäle zueinander in Strömungsrichtung versetzt angeordnet. Der Abstand der seitlichen Einflüsse liegt bspw. im µm- bis mm-Bereich.

Eine Kanalstruktur zur Realisierung der Erfindung kann gegenüber den oben erläuterten Ausführungsformen vielfältig modifiziert werden. Es kann bspw. ein Strömungsauskoppler zur Abführung suspendierter Mikropartikel als eigenständiges Bauteil vorgesehen sein, das am Ausgangskanal (z. B. 14, siehe Figur 1) eines Mikrosystems angebracht ist. Ein Strömungsauskoppler besitzt Ausmaße von ca. 1 bis 20 mm und kann somit ohne Weiteres mit geeigneten Hilfsmitteln, z. B. Pinzette, manuell eingerichtet werden. Zur Verbindung zwischen dem Strömungsauskoppler-Bauteil und einem Mikrosystem-Chip sind bspw. abgedichtete Steckkoppler aus Kunststoff oder dergleichen vorgesehen.

Abweichend von der dargestellten Form gekrümmter Auskoppelkanäle können auch andere gerade oder kurvenförmige Kanalgestalten vorgesehen sein. Die Auskoppelströme können auch aus einer vom fluidischen Mikrosystem abweichenden Ebene aus am Ende des jeweiligen Ausgangskanals münden. Bei Mikrosystemen mit mehreren Ausgangskanälen oder auch am Ende des Ablaufs eines Mikrosystems können erfindungsgemäße Strömungsauskoppler angebracht sein. Weitere Modifizierungsmöglichkeiten ergeben sich anwendungsabhängig in Bezug auf die Größe und Strömungsparameter der Strömungsauskoppler.

Erfindungsgemäß kann bei den oben beschriebenen Ausführungsformen vorgesehen sein, dass im Ableitungselement eines Strömungsauskopplers (z. B. Ableitungselement 19 in Figur 1) zusätzlich Einrichtungen zur Partikel- und/oder Fluidmanipulierung angeordnet sind. Diese Einrichtungen umfassen bspw. Zusatzelektroden zur Ausbildung von elektrischen Feldern in der Suspensionsströmung im Ableitungselement. Mit den elektrischen Feldern könnten in an sich bekannter Weise Elektroosmoseströmungen induziert oder die elektrophoretische Teilchentrennungen vorgenommen werden. Bei derartigen Ausführungsformen können am Ende eines Ableitungselementes anstelle eines Ausgangs (z. B. Ausgang 15 in Figur 1) mehrere Ausgänge als Auslässe von getrennten Partikeln und/oder Strömungen vorgesehen sein.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Abführung eines Fluidstroms mit suspendierten Mikropartikeln (21a) aus einem fluidischen Mikrosystem (10),
**dadurch gekennzeichnet, dass**
der Fluidstrom am Ende mindestens eines Ausgangskanals (14, 21, 31, 41, 51) des Mikrosystems mit mindestens einem Auskoppelstrom zu einem Ausgangsstrom zusammengeführt und der Ausgangsstrom durch ein Ableitungselement (19, 26, 35, 45, 55a, 55b) abgeleitet wird.

2. Verfahren gemäß Anspruch 1, bei dem der Auskoppelstrom mit mindestens einem Strömungsauskoppler (20, 30, 40, 50a, 50b) mit mindestens einem Auskoppelkanal (16a, 16b, 25a, 25b, 34, 42a, 42b) erzeugt wird, der in den oder am Ende des Ausgangkanals (14, 21, 31, 41, 51) mündet.

3. Verfahren gemäß Anspruch 1 oder 2, bei dem mit dem Strömungsauskoppler (20, 30, 40, 50a, 50b) eine Strömungsgeschwindigkeit des Auskoppelstroms eingestellt wird, die geringer als die Strömungsgeschwindigkeit des Fluids im Ausgangskanal ist.

4. Verfahren gemäß Anspruch 1 oder 2, bei dem mit dem Strömungsauskoppler (20, 30, 40, 50a, 50b) eine Strömungsgeschwindigkeit des Auskoppelstroms eingestellt wird, die höher als die Strömungsgeschwindigkeit des Fluids im Ausgangskanal ist.

5. Verfahren gemäß einem der vorhergehenden Ansprüche, bei dem mit dem Strömungsauskoppler (20, 30, 40, 50a, 50b) ein Ausgangsstrom gebildet wird, in dem die Dichte oder Konzentration der Mikropartikel geringer ist als im anfänglichen Fluidstrom.

6. Verfahren gemäß Anspruch 1, bei dem der Ausgangsstrom aus dem Fluidstrom und ersten Auskoppelströmen (54a, d) mit weiteren Auskoppelströmen (54b, c) zusammengeführt und durch ein Ableitungselement abgeleitet wird.

7. Verfahren gemäß einem der vorhergehenden Ansprüche, bei dem zur Bildung des Auskoppelstromes mindestens eine Behandlungslösung zur Behandlung der Mikropartikel verwendet wird.

8. Verfahren gemäß einem der vorhergehenden Ansprüche, bei dem eine Einzelzellablage in einer Mess-, Manipulator- oder Speichereinrichtung erfolgt, indem mit dem Auskoppelstrom für jeden Mikropartikel eine bestimmte Fluidmenge bereitgestellt wird, die als Tropfen mit dem Mikropartikel in die Mess-, Manipulator- oder Speichereinrichtung überführt wird.

9. Verfahren gemäß Anspruch 8, bei dem eine Einzelzellablage auf einer Titerplatte oder einer Zellkulturplatte erfolgt.

10. Verfahren gemäß einem der vorhergehenden Ansprüche, bei dem im fluidischen Mikrosystem vor der Abführung des Fluidstromes mit den suspendierten Mikropartikeln eine Manipulierung und/oder Charakterisierung der Mikropartikel erfolgt.

11. Verfahren gemäß einem der vorhergehenden Ansprüche, bei dem die Mikropartikel biologische Zellen oder Zellbestandteile, synthetische Partikel, Makromoleküle und/oder Makromolekülaggregate umfassen.

12. Fluidisches Mikrosystem (10), das eine Kanalanordnung (12) zur Aufnahme und/oder zum Durchfluss von Fluiden mit suspendierten Mikropartikeln (21a) und mindestens einen Ausgangskanal (14, 21, 31, 41, 51) zur Führung eines Fluidstromes aufweist,
**gekennzeichnet durch**
mindestens einen Strömungsauskoppler mit mindestens einem Auskoppelkanal (16a, 16b, 25a, 25b, 34, 42a, 42b) zur Führung mindestens eines Auskoppelstromes (24, 44, 54a-d), wobei der Auskoppelkanal am Ende des Ausgangskanals mündet.

13. Mikrosystem gemäß Anspruch 12, bei dem der Auskoppelkanal und der Ausgangskanal in ein Ableitungselement (19, 26, 35, 45, 55a, 55b) zur Führung eines Ausgangsstromes aus Fluid- und Auskoppelströmen bis zu einem Ausgang (15, 27, 32, 46, 52) zusammenlaufen.

14. Mikrosystem gemäß Anspruch 13, bei dem mehrere Strömungsauskoppler (50a, 50b) vorgesehen sind, die aufeinanderfolgend stromabwärts am Ausgangskanal (51) bzw. am Ableitungselement (55a) vorgesehen sind.

15. Mikrosystem gemäß einem der Ansprüche 12 bis 14, bei dem jeder Auskappelkanal so ausgerichtet ist, dass der Auskoppelstrom und der Fluidstrom zueinander unter einem Winkel verlaufen, der kleiner als 90° ist.

16. Mikrosystem gemäß einem der Ansprüche 12 bis 15, bei dem jeder Auskoppelkanal eine gekrümmte Form besitzt, an deren Ende der Auskoppelkanal konvergent in den Ausgangskanal mündet.

17. Mikrosystem gemäß einem der Ansprüche 12 bis 16, bei dem ein Auskoppelkanal (34) vorgesehen ist, der an einer Seite des Endes des jeweiligen Ausgangskanals (31) mündet.

18. Mikrosystem gemäß einem der Ansprüche 12 bis 16, bei dem zwei Auskoppelkanäle (16a, 16b, 25a, 25b, 42a, 42b) vorgesehen sind, die von zwei zueinander gegenüberliegenden Seiten her am Ende des Ausgangskanals (14, 21, 41) münden.

19. Mikrosystem gemäß Anspruch 17, bei dem die zwei Auskoppelkanäle (42a, 42b) relativ zum Ausgangskanal (41) asymmetrisch geformte Kanalbögen bilden.

20. Mikrosystem gemäß einem der Ansprüche 12 bis 19, bei dem der Strömungsauskoppler eine Pumpeneinrichtung mit steuerbarer Pumprate aufweist.

21. Mikrosystem gemäß Anspruch 20, bei dem die Pumpeneinrichtung auf der Anwendung von hydrostatischem Druck basiert.

22. Mikrosystem gemäß einem der Ansprüche 12 bis 21, bei dem der Strömungsauskoppler mindestens ein Reservoir mit Behandlungslösungen aufweist.

23. Mikrosystem gemäß Anspruch 22, bei dem die Behandlungslösungen Waschlösungen, Konservierungslösungen, Kultivierungmedien und/oder Kryokonservierungslösungen umfassen.

24. Mikrosystem gemäß einem der Ansprüche 12 bis 23, bei dem die Kanalanordnung Teil eines Festkörperchips ist, an dem der Strömungsauskoppler lösbar befestigt ist.

25. Strömungsauskoppler, bestehend aus einem an einem fluidischen Mikrosystem flüssigkeitsdicht ansetzbaren Bauteil zur Abführung suspendierter Mikropartikel, mit mindestens einem Auskoppelkanal (16a, 16b, 25a, 25b, 34, 42a, 42b), der einerseits ein freies Ende und andererseits einen Anschluß für eine Pumpeneinrichtung und/oder ein Reservoir mit Behandlungslösungen besitzt.

## Claims

1. Method for withdrawing a fluid stream with suspended microparticles (21a) from a fluidic microsystem (10), **characterised in that** the fluid stream at the end of at least one outflow channel (14, 21, 31, 41, 51) of the microsystem is brought together with at least one separation stream to form an outflow stream and the outflow stream is discharged through a discharge element (19, 26, 35, 45, 55a, 55b).

2. Method according to Claim 1, in which the separation stream is generated with at least one flow separator (20, 30, 40, 50a, 50b) with at least one separation channel (16a, 16b, 25a, 25b, 34, 42a, 42b), which opens into the outflow channel (14, 21, 31, 41, 51) or at the end thereof.

3. Method according to Claim 1 or 2, in which a flow velocity of the separation stream that is less than the flow velocity of the fluid in the outflow channel is adjusted with the flow separator (20, 30, 40, 50a, 50b).

4. Method according to Claim 1 or 2, in which a flow velocity of the separation stream that is higher than the flow velocity of the fluid in the outflow channel is adjusted with the flow separator (20, 30, 40, 50a, 50b).

5. Method according to one of the preceding claims, in which an outflow stream, in which the density or concentration of the microparticles is less than in the initial fluid stream, is formed with the flow separator (20, 30, 40, 50a, 50b).

6. Method according to Claim 1, in which the outflow stream comprising the fluid stream and first separation streams (54a, d) is brought together to form further separation streams (54b, c) and is discharged through a discharge element.

7. Method according to one of the preceding claims, in which at least one treatment solution is used to treat the microparticles to form the separation stream.

8. Method according to one of the preceding claims, in which a single cell deposit is performed in a measurement, manipulator or storage means in that a specific fluid quantity is provided for each microparticle with the separation stream and is transferred in droplet form with the microparticle into the measurement, manipulator or storage means.

9. Method according to Claim 8, in which a single cell deposit is made on a titre plate or a cell culture plate.

10. Method according to one of the preceding claims, in which manipulation and/or characterisation of the microparticles is conducted in the fluidic microsystem before withdrawal of the fluid stream with the suspended microparticles.

11. Method according to one of the preceding claims, in that the microparticles comprise biological cells or cell components, synthetic particles, macroparticles and/or macromolecular aggregates.

12. Fluidic microsystem (10), which has a channel arrangement (12) for the take-up and/or passage of fluids with suspended microparticles (21a) and at least one outflow channel (14, 21, 31, 41, 51) for guidance of a fluid stream, **characterised by** at least one stream separator with at least one separation channel (16a, 16b, 25a, 25b, 34, 42a, 42b) for guidance of at least one separation stream (24, 44, 54a-d), wherein the separation stream opens at the end of the outflow channel.

13. Microsystem according to Claim 12, in which the separation channel and the outflow channel run together into a discharge element (19, 26, 35, 45, 55a, 55b) for guidance of an outflow stream comprising fluid and separation streams as far as an outflow (15, 27, 32, 46, 52).

14. Microsystem according to Claim 13, in which several flow separators (50a, 50b) are provided, which are provided one after the other downstream at the outflow channel (51) or at the discharge element (55a).

15. Microsystem according to one of Claims 12 to 14, in which each separation channel is oriented so that the separation stream and the fluid stream run towards one another at an angle that is smaller than 90°.

16. Microsystem according to one of Claims 12 to 15, in which each separation channel has a curved shape, at the end of which the separation channel converges into the outflow channel.

17. Microsystem according to one of Claims 12 to 16, in which a separation channel (34) is provided, which opens on one side of the end of the respective outflow channel (31).

18. Microsystem according to one of Claims 12 to 16, in which two separation channels (16a, 16b, 25a, 25b, 42a, 42b) are provided, which open from two opposing sides at the end ofthe outflow channel (14, 21, 41).

19. Microsystem according to Claim 17, in which the two separation channels (42a, 42b) form channel curves shaped asymmetrically relative to the outflow channel(41).

20. Microsystem according to one of Claims 12 to 19, in which the flow separator has a pump means with controllable pumping rate.

21. Microsystem according to Claim 20, in which the pump means operation is based on the application of hydrostatic pressure.

22. Microsystem according to Claim 12 to 21, in which the flow separator has at least one reservoir with treatment solutions.

23. Microsystem according to Claim 22, in which the treatment solutions comprise washing solutions, preservative solutions, culture media and/or cryo-preservative solutions.

24. Microsystem according to one of Claims 12 to 23, in which the channel arrangement is part of a solid chip, to which the flow separator is detachably fastened.

25. Flow separator comprising a component, which may be attached to the fluidic microsystem to be liquid-tight for the withdrawal of suspended microparticles, with at least one separation channel (16a, 16b, 25a, 25b, 34, 42a, 42b), which on one side has a free end and on the other side a connection for a pump means and/or a reservoir with treatment solutions.

## Revendications

1. Procédé pour évacuer hors d'un microsystème fluidique (10) un flux de fluide avec des microparticules (21a) suspendues, **caractérisé en ce que** le flux de fluide rejoint un flux de sortie à l'extrémité d'au moins un canal de sortie (14, 21, 31, 41, 51) du microsystème avec au moins un flux d'extraction et que ledit flux de sortie est dévié par un élément de déviation (19, 26, 35, 45, 55a, 55b).

2. Procédé selon la revendication 1, dans lequel le flux d'extraction est produit avec au moins un dispositif d'extraction d'écoulement (20, 30, 40, 40a, 50b) avec au moins un canal d'extraction (16a, 16b, 25a, 25b, 34, 42a, 42b), ledit canal débouchant dans ou à l'extrémité du canal de sortie (14, 21, 31, 41, 51).

3. Procédé selon la revendication 1 ou 2, dans lequel une vitesse d'écoulement du flux d'extraction est établie avec le dispositif d'extraction d'écoulement (20, 30, 40, 50a, 50b), ladite vitesse étant inférieure à la vitesse d'écoulement du fluide dans le canal de sortie.

4. Procédé selon la revendication 1 ou 2, dans lequel une vitesse d'écoulement du flux d'extraction est établie avec le dispositif d'extraction d'écoulement (20, 30, 40, 50a, 50b), ladite vitesse étant supérieure à la vitesse d'écoulement du fluide dans le canal de sortie.

5. Procédé selon l'une quelconque des revendications précédentes, dans lequel un flux de sortie est formé avec le dispositif d'extraction d'écoulement (20, 30, 40, 50a, 50b), la densité ou la concentration des microparticules dans ledit écoulement étant inférieure au flux de fluide initial.

6. Procédé selon la revendication 1, dans lequel le flux de sortie constitué du flux de fluide et des premiers flux d'extractions (54a, d) rejoint d'autres flux d'extraction (54b, c) et est dévié par un élément de déviation.

7. Procédé selon l'une quelconque des revendications précédentes, dans lequel au moins une solution de traitement destinée à traiter les microparticules est utilisée pour former le flux d'extraction.

8. Procédé selon l'une quelconque des revendications précédentes, dans lequel un dépôt de cellules individuelles a lieu dans un dispositif de mesure, de manipulation ou de stockage, moyennant quoi une certaine quantité de fluide est mise à disposition avec le flux d'extraction pour chaque microparticule, ladite quantité de fluide étant transmise sous forme de gouttes avec les microparticules dans le dispositif de mesure, de manipulation ou de stockage.

9. Procédé selon la revendication 8, dans lequel un dépôt de cellules individuelles a lieu sur une plaquette de titrage ou une plaque de culture cellulaire.

10. Procédé selon l'une quelconque des revendications précédentes, dans lequel une manipulation et/ou une caractérisation des microparticules a lieu avec les microparticules suspendues dans le microsystème fluidique avant l'évacuation du flux de fluide.

11. Procédé selon l'une quelconque des revendications précédentes, dans lequel les microparticules comprennent des cellules biologiques ou des composants cellulaires, des particules synthétiques, des macromolécules et/ou des agrégats de macromolécules.

12. Microsystème fluidique (10) qui présente une disposition de canaux (12) pour la réception et/ou l'écoulement de fluides avec des microparticules suspendues (21a) et au moins un canal de sortie (14, 21, 31, 41, 51) pour guider un flux de fluide, **caractérisé par** au moins un dispositif d'extraction d'écoulement avec au moins un canal d'extraction (16a, 16b, 25a, 25b, 34, 42a, 42b) pour guider au moins un flux d'extraction (24, 44, 54a-d), moyennant quoi le canal d'extraction débouche à l'extrémité du canal de sortie.

13. Microsystème selon la revendication 12, dans lequel le canal d'extraction et le canal de sortie se rejoignent dans un élément de déviation (19, 26, 35, 45, 55a, 55b) pour guider jusque à une sortie (15, 27, 32, 46, 52) un flux de sortie composé des flux de fluide et d'extraction.

14. Microsystème selon la revendication 13, dans lequel sont prévus plusieurs dispositifs d'extraction d'écoulement (50a, 50b) qui sont prévus les uns derrière les autres en aval sur le canal de sortie (51) et/ou sur l'élément de déviation (55a).

15. Microsystème selon l'une quelconque des revendications 12 à 14, dans lequel chaque canal d'extraction est orienté de telle sorte que le flux d'extraction et le flux de fluide se rejoignent en formant un angle inférieur à 90°.

16. Microsystème selon l'une quelconque des revendications 12 à 15, dans lequel chaque canal d'extraction a une forme courbée à l'extrémité de laquelle le canal d'extraction débouche de manière convergente dans le canal de sortie.

17. Microsystème selon l'une quelconque des revendications 12 à 16, dans lequel est prévu un canal d'extraction (34) qui débouche sur un côté de l'extrémité du canal de sortie (31) respectif.

18. Microsystème selon l'une quelconque des revendications 12 à 16, dans lequel sont prévus deux canaux d'extraction (16a, 16b, 25a, 25b, 42a, 42b) qui débouchent à l'extrémité du canal de sortie (14, 21, 41) depuis deux côtés opposés l'un à l'autre.

19. Microsystème selon la revendication 17, dans lequel les deux canaux d'extraction (42a, 43b) forment des canaux en arc asymétriques par rapport au canal de sortie (41).

20. Microsystème selon l'une quelconque des revendications 12 à 19, dans lequel le dispositif d'extraction d'écoulement présente un dispositif de pompe avec un débit de pompe pouvant être commandé.

21. Microsystème selon la revendication 20, dans lequel le dispositif de pompe est basé sur l'utilisation de la pression hydrostatique.

22. Microsystème selon l'une quelconque des revendications 12 à 21, dans lequel le dispositif d'extraction d'écoulement présente au moins un réservoir avec des solutions de traitement.

23. Microsystème selon la revendication 22, dans lequel les solutions de traitement comprennent des solutions de lavage, des solutions de conservation, des milieux de cultures et/ou des solutions de cryoconservation.

24. Microsystème selon l'une quelconque des revendications 12 à 23, dans lequel l'arrangement de canaux fait partie d'un microcircuit à semi-conducteurs sur lequel le dispositif d'extraction d'écoulement est fixé de manière détachable.

25. Dispositif d'extraction d'écoulement, composé d'un composant pouvant être appliqué de manière étanche au fluide sur un microsystème fluidique pour évacuer des microparticules suspendues, avec au moins un canal d'extraction (16a, 16b, 25a, 25b, 34, 42a, 42b) qui possède d'un côté une extrémité libre et de l'autre côté un raccordement pour un dispositif de pompe et/ou un réservoir avec des solutions de traitement.
